Europäisches Patentamt

European Patent Office

Office européen des brevets

(19)

(11) Veröffentlichungsnummer: **0 242 584**
B1

(12) **EUROPÄISCHE PATENTSCHRIFT**

(45) Veröffentlichungstag der Patentschrift:
05.12.90

(21) Anmeldenummer: 87103788.3

(22) Anmeldetag: 16.03.87

(51) Int. Cl.⁵: **F16L 55/00, F16L 3/00**

(54) Einrichtung zur mechanischen Entkopplung eines Rohrleitungssystems.

(30) Priorität: 26.03.86 DE 3610331

(43) Veröffentlichungstag der Anmeldung:
28.10.87 Patentblatt 87/44

(45) Bekanntmachung des Hinweises auf die Patenterteilung:
05.12.90 Patentblatt 90/49

(84) Benannte Vertragsstaaten:
BE CH DE ES FR GB LI

(73) Patentinhaber: Siemens Aktiengesellschaft,
Wittelsbacherplatz 2, D-8000 München 2(DE)

(72) Erfinder: Buerhop, Hans, Dr. Dipl.-Ing.,
Rehweiherstrasse 5, D-8520 Erlangen(DE)

(56) Entgegenhaltungen:
CH-A- 385 116
GB-A- 2 088 515
US-A- 3 539 137

HEATING/PIPING/AIR CONDITIONING, Band 57, Nr. 12,
Dezember 1985, Seiten 135-138, Stamford, Connecticut,
US; J. HABJAN "Duct hanger location guidelines"
CHEMICAL ENGINEERING; Band 73, 14. Februar 1966,
Seiten 153-160, New York, US; J. KIVEN "Controlling
thermal expansion in piping systems"
K.W. USEMANN, "Klinger-Taschenbuch für
Heizungs,-Lüftungs-und Badetechniker", 1968, Karl
Marholdverlagsbuchhandlung, Seite 222
W. BEITZ und K.H. KUTTNER, "Dubbel", 1981,
Springer-Verlag, Berlin - Heidelberg - New York,
Seite 498

## Beschreibung

Die Erfindung betrifft eine Einrichtung zur mechanischen Entkopplung eines Rohrleitungssystems, das mindestens ein Verbindungsrohrstück aufweist, mit dem von einem Verbindungspunkt ausgehend verschieden gerichtete gerade Rohrleitungsabschnitte verbunden sind, wobei Rohrleitungen des Rohrleitungssystems in gleichen, von der Belastbarkeit der Rohre abhängenden Abständen in mit einem Gebäude fest verbundenen Halterungen gelagert sind und, damit Schwingungen des Rohrleitungssystems berechenbar sind, durch mindestens eine Festpunkthalterung unbeweglich gehalten sind.

Rohre eines Rohrleitungssystems werden gemäß "Heating/Piping/Air Conditioning 57 (1985)" mit geeigneten Halterungen an einem Gebäude abgestützt. Dabei ist es besonders wichtig, daß im Bereich eines Rohrbogens Halterungen angebracht sind. Dadurch ist eine stabile Lagerung des gesamten Rohrleitungssystems stets gewährleistet.

Auf Rohrleitungssysteme wirken verschiedenartige äußere Kräfte ein. Die durch diese Kräfte verursachten Auslenkungen der Rohre sind nur mit sehr großem Aufwand zu erfassen und zu berechnen. Um große Rohrleitungssysteme einer einfachen Berechnung zugänglich zu machen, ist es üblich, daß die Systeme durch geeignete Entkopplungseinrichtungen unterteilt sind.

Zur mechanischen Entkopplung eines Rohrleitungssystems ist ein Festpunkt erforderlich. Ein Festpunkt ist beispielsweise aus "Dubbel: Taschenbuch für den Maschinenbau, Springer Verlag, 1981" bekannt. Der mechanische Aufbau eines solchen Festpunktes ist dort nicht beschrieben.

Ein geeigneter Festpunkt für ein Rohrleitungssystem ist auch aus "Klinger-Taschenbuch für Heizungs-, Lüftungs- und Badetechniker, Carl Marhold Verlag, 1968" bekannt. Dort wird eine handelsübliche Festpunktschelle erwähnt. Diese Festpunktschelle zeichnet sich durch eine große träge Masse aus.

Eine bekannte Einrichtung zur mechanischen Entkopplung eines Rohrleitungssystems besteht folglich aus einem aufwendigen, schweren Festpunktformstück, z.B. aus Stahl, das in der Stahlbetonkonstruktion eines Gebäudes verankert ist und ein Rohr des Rohrleitungssystems über eine bestimmte Länge umfaßt. Durch ein solches Festpunktformstück wird gewährleistet, daß selbst durch die größten möglichen äußeren Kräfte die Rohrleitung am Festpunkt nicht ausgelenkt wird.

An großen Rohrleitungssystemen treten große Kräfte auf, die ein sehr stabiles und damit schweres Festpunktformstück erfordern. Ein derartiges Festpunktformstück erfordert einen großen Fertigungsaufwand, da neben dem hohen Materialbedarf jedes Formstück einzeln zu fertigen ist. Außerdem ist wegen des hohen Gewichtes des Formstückes ein großer Aufwand bei der Montage erforderlich. Dazu ist stets ein Hebekran notwendig. Darüber hinaus sind derartige schwere Formstücke nur mit großem konstruktivem Aufwand an der Stahlbetonkonstruktion eines Gebäudes zu befestigen.

Der Erfindung liegt die Aufgabe zugrunde, eine Einrichtung zur mechanischen Entkopplung eines Rohrleitungssystems zu entwickeln, die mit einfachen und leichten Halterungen für die Rohrleitungen auskommt und trotzdem einen für die Berechnung des Rohrleitungssystems notwendigen Festpunkt sicherstellt. Der Arbeits- und Materialaufwand soll gegenüber dem Einsatz von Festpunktformstücken deutlich verringert werden.

Die Aufgabe wird erfindungsgemäß dadurch gelöst, daß die Halterungen ausnahmslos handelsübliche Rohrschellen sind, daß als Festpunkthalterung des Rohrleitungssystems drei Rohrschellen im Bereich eines Verbindungsrohrstückes angeordnet sind, wobei an jedem der verschieden gerichteten Rohrleitungsabschnitte mindestens eine Rohrschelle angeordnet ist, so daß die drei Rohrschellen die Ecken eines Dreieckes bilden, und daß die Abstände zwischen dem Verbindungspunkt der verschieden gerichteten Rohrleitungsabschnitte und den benachbarten, die Festpunkthalterung bildenden Rohrschellen sowie zwischen zwei unmittelbar benachbarten die Festpunkthalterung bildenden Rohrschellen zwischen 9 und 11 Hundertstel des Abstandes zwischen benachbarten, ausschließlich zur Lagerung dienenden übrigen Halterungen des Rohrleitungssystems betragen.

Eine derartige Einrichtung zur mechanischen Entkopplung eines Rohrleitungssystems wirkt wie ein Hochpaßfilter zwischen den Teilen des Systems. Obwohl jede einzelne handelsübliche Rohrschelle nicht in der Lage ist, mögliche Schwingungen des Rohres zu unterbinden, wird durch die Kombination von drei solchen Rohrschellen, die mit kurzen Abständen nach Art eines Dreieckes angeordnet sind, ein für die Berechnung notwendiger Festpunkt des Rohrleitungssystems sichergestellt.

Hiermit wird der Vorteil erzielt, daß der Festpunkt zur mechanischen Entkopplung eines Rohrleitungssystems mit handelsüblichen Rohrschellen auf wirtschaftliche Weise zu erstellen ist. Darüber hinaus sind diese Rohrschellen erheblich leichter als bekannte Festpunktformstücke und sind daher leichter handhabbar.

Ein Verbindungsrohrstück in einem Rohrleitungssystem ist beispielsweise ein Rohrbogen, der mit zwei geraden Rohrleitungsabschnitten verbunden ist. Der Verbindungspunkt ist hierbei der Scheitelpunkt des Rohrbogens, der definitionsgemäß derjenige Punkt ist, in dem sich die gedachten Verlängerungen der geraden Rohrleitungsabschnitte schneiden. Im Bereich des Rohrbogens wird ein Festpunkt durch zwei vor dem Rohrbogen und eine hinter dem Rohrbogen an den geraden Rohrleitungsabschnitten angeordnete Rohrschellen gebildet. Ein gleichwertiger Festpunkt wird gebildet, falls eine Rohrschelle vor und zwei hinter dem Rohrbogen positioniert sind. Die Abstände zwischen dem Scheitelpunkt des Rohrbogens und den beiden dem Rohrbogen benachbarten Rohrschellen des Festpunktes betragen jeweils zwischen 9 und 11 Hundertstel des Abstandes zwischen benachbarten Halterungen, die ausschließlich zur Lagerung dienen. Den gleichen kurzen Abstand haben die beiden am geraden Rohrleitungsabschnitt unmittelbar benachbarten Rohrschellen des Festpunktes.

In jedem Rohrleitungssystem sind viele Rohrbögen vorhanden. Überall dort ist eine erfindungsgemäße Einrichtung zur mechanischen Entkopplung des Rohrleitungssystems anbringbar.

Nach einem anderen Beispiel ist ein geeignetes Verbindungsrohrstück zum Anordnen eines Festpunktes ein T-Stück, mit dem drei gerade Rohrleitungsabschnitte verbunden sind. Hierbei ist als Verbindungspunkt der Abzweigepunkt des T-Stückes anzusehen. Der Festpunkt wird durch jeweils eine Rohrschelle in jedem an das T-Stück angrenzenden Rohrleitungsabschnitt gebildet. Dabei betragen die Abstände zwischen dem Abzweigepunkt des T-Stückes und den drei benachbarten Rohrschellen jeweils zwischen 9 und 11 Hundertstel des Abstandes zwischen benachbarten Halterungen des Rohrleitungssystems, die ausschließlich zur Lagerung dienen.

In einem großen Rohrleitungssystem sind mehrere Abzweigungen vorhanden. Daher sind zusätzlich zu den Positionen im Bereich der Rohrbögen noch viele andere Orte zum Aufbau der erfindungsgemäßen Einrichtung zur mechanischen Entkopplung des Rohrleitungssystems vorhanden. Im übrigen reicht in den meisten Fällen für die notwendige Berechnung des Rohrleitungssystems eine einzige Einrichtung zur mechanischen Entkopplung aus.

Jedes Rohrleitungssystem enthält Rohrbögen und in der Regel auch T-Stücke. Die erfindungsgemäße Einrichtung zur mechanischen Entkopplung des Rohrleitungssystems ist folglich an jedem Rohrleitungssystem einsetzbar.

Damit die drei, die Ecken eines Dreiecks bildenden Rohrschellen derart zusammenwirken, daß ein Festpunkt gebildet wird, sind die Abstände zwischen dem Verbindungspunkt der verschieden gerichteten Rohrleitungsabschnitte und den benachbarten Rohrschellen ebenso wie der Abstand zwischen zwei an einem Rohrleitungsabschnitt unmittelbar benachbarten Festpunktrohrschellen wesentlich kürzer als die Abstände der übrigen Halterungen. Ein für die Berechnung des Rohrleitungssystems stabiler Festpunkt ist gewährleistet, falls die Abstände innerhalb der erfindungsgemäßen Einrichtung zwischen 9 und 11 Hundertstel eines Abstandes zwischen den übrigen ausschließlich zur Lagerung dienenden und in gleichen Abständen angeordneten Halterungen des Rohrleitungssystems betragen.

Die regelmäßigen Abstände zwischen den Halterungen des Rohrleitungssystems sind vorgegeben und hängen vom Material, der Wandstärke und dem Durchmesser der Rohre ab. Die Abstände innerhalb der erfindungsgemäßen Entkopplungseinrichtung stehen in dem erfindungsgemäßen Verhältnis zu den regelmäßigen Abständen. Dadurch wird der Vorteil erzielt, daß ein stabiler Festpunkt am Rohrleitungssystem mit einfachen handelsüblichen Rohrschellen zu bauen ist, die leicht handhabbar und zu montieren sind. Die nach der Erfindung vorgesehenen Abstände innerhalb der erfindungsgemäßen Entkoppelungseinrichtung sind so groß, daß die Schweißnähte am Rohrbogen und am T-Stück jederzeit selbst für Schweißnahtprüfgeräte zugänglich sind.

Mit der Erfindung wird der Vorteil erzielt, daß ein zur Berechnung des Rohrleitungssystems notwendiger Festpunkt am System mit einfachen Mitteln leicht aufzubauen ist.

Die Erfindung wird anhand der Zeichnung näher erläutert:

Fig. 1 zeigt im Bereich eines Rohrbogens die erfindungsgemäße Einrichtung zur mechanischen Entkopplung eines Rohrleitungssystems in verzerrtem Maßstab.

Fig. 2 zeigt in verzerrtem Maßstab die erfindungsgemäße Einrichtung zur Entkopplung eines Rohrleitungssystems im Bereich eines T-Stückes, das eine Verzweigung der Rohrleitungen bildet.

Fig. 3 zeigt nicht maßstabsgerecht die Anordnung nach Fig.1 in perspektivischer Darstellung.

Fig. 4 zeigt nicht maßstabsgerecht die Anordnung nach Fig. 2 in perspektivischer Darstellung.

Rohrleitungen 1 eines Rohrleitungssystems sind durch Halterungen 2 mit einem Gebäude fest verbunden. Der Halterungsabstand $L_R$ ist durch mechanische Eigenschaften der Rohre festgelegt. An gleichartigen Rohren ist der Halterungsabstand $L_R$ konstant. Damit auch große Rohrleitungssysteme einer Berechnung zugänglich sind, sind diese Systeme durch geeignete Entkopplungseinrichtungen unterteilt. Die erfindungsgemäße Einrichtung zur mechanischen Entkopplung besteht aus drei handelsüblichen Rohrschellen 21 bis 23 oder 24 bis 26, die auf im Vergleich zum Halterungsabstand $L_R$ kleinem Raum so angeordnet sind, daß sie die Ecken eines Dreieckes bilden.

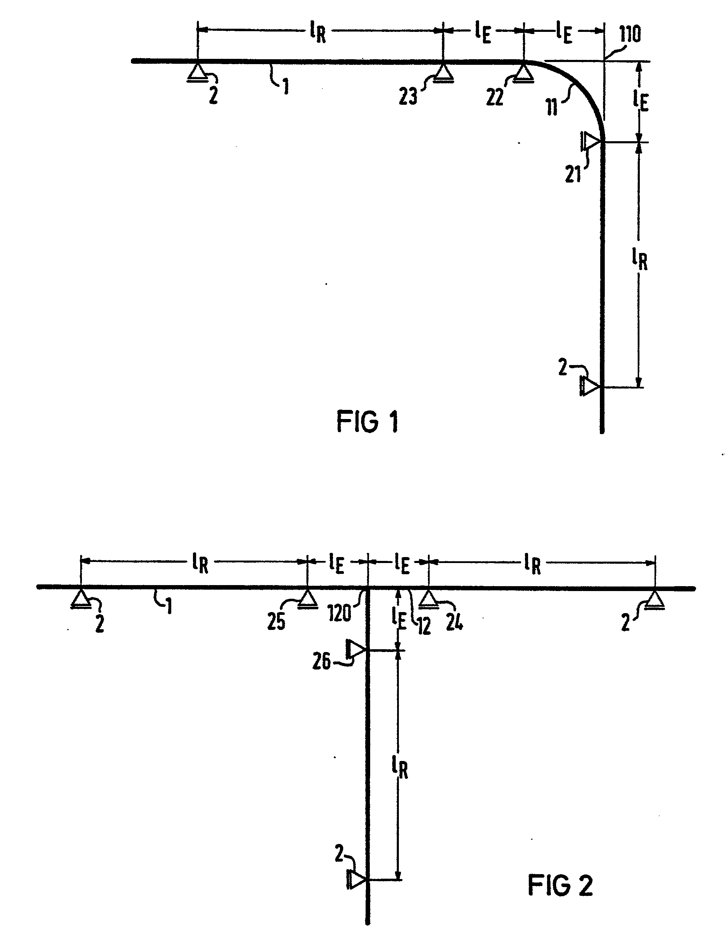

Die erfindungsgemäße Einrichtung ist nach Fig. 1 im Bereich eines Rohrbogens 11 angeordnet. Dabei befinden sich dem Rohrbogen 11 benachbarte Rohrschellen 21 und 22 in Abständen $L_E$ vom Scheitelpunkt 110 des Rohrbogens 11 entfernt an der Rohrleitung 1. Die dritte Rohrschelle 23 ist an einem der geraden Schenkel der Rohrleitung 1 im Abstand $L_E$ von der benachbarten Rohrschelle 22 angeordnet. Der Abstand $L_E$ innerhalb der erfindungsgemäßen Einrichtung zur mechanischen Entkopplung beträgt ein Zehntel eines am übrigen Rohrleitungssystem notwendigen Halterungsabstandes $L_R$.

Zur Entkopplung eines Rohrleitungssystems im Bereich eines T-Stückes 12, das eine Abzweigung nach Fig. 2 bildet, sind im Abstand $L_E$ vom Abzweigepunkt 120 an jedem Rohrleitungszweig jeweils eine handelsübliche Rohrschelle 24 bis 26 angeordnet. Die drei Rohrschellen 24 bis 26 bilden die Ecken eines Dreieckes. Ihre Abstände $L_E$ vom Abzweigepunkt 120 betragen ein Zehntel des Halterungsabstandes $L_R$ am Rohrleitungssystem.

An den Ecken eines Dreieckes mit erfindungsgemäßen Abständen angeordnete einfache, handelsübliche Rohrschellen 21 bis 23 oder 24 bis 26, wirken so zusammen, daß sie einen Festpunkt bilden, der das Rohrleitungssystem mechanisch entkoppelt. Durch einen solchen erfindungsgemäßen Festpunkt wird das Rohrleitungssystem einfach und kostengünstig der Berechnung zugänglich gemacht.

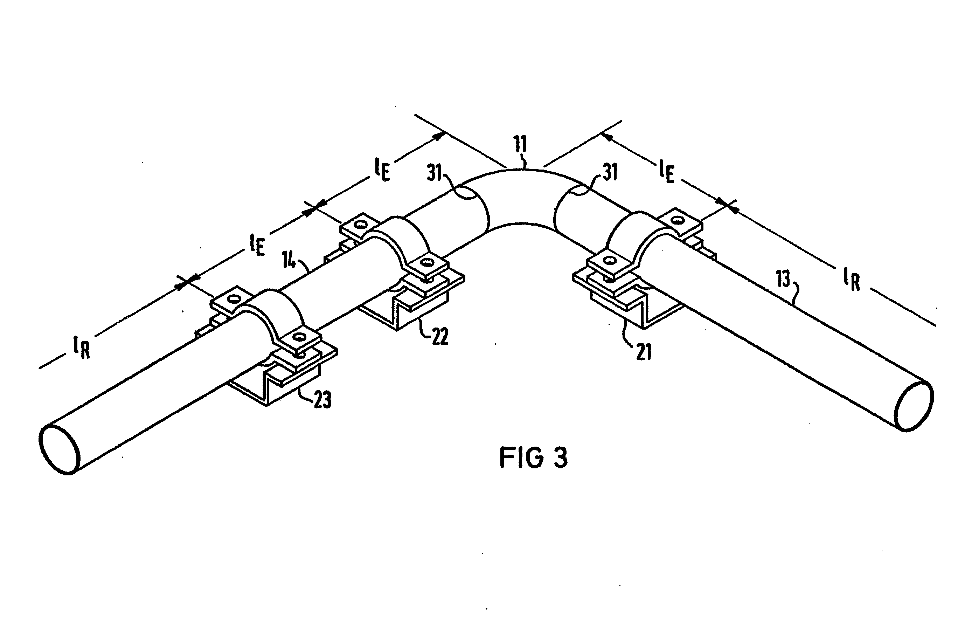

Eine erfindungsgemäße Einrichtung zur mechanischen Entkopplung eines Rohrleitungssystems, die gemäß Fig. 1 im Bereich eines Rohrbogens 11 angeordnet ist, zeigt Fig. 3 in perspektivischer Darstellung. Der Rohrbogen 11 ist mit Schweißnähten 31 an gerade Rohrstücke 13 und 14 angeschweißt. Die handelsüblichen Rohrschellen 21 und 22 sind auf beiden Seiten des Rohrbogens 11 an den geraden Rohrstücken 13 und 14 angebracht. Dabei ist der erfindungsgemäße Abstand $L_E$ vom Scheitelpunkt 110 des Rohrbogens 11 ausreichend groß, so daß die Schweißnähte 31 jederzeit selbst mit Prüfgeräten zu untersuchen sind. Die dritte Rohrschelle 23, die gemeinsam mit den beiden anderen Rohrschellen 21 und 22 die erfindungsgemäße Einrichtung bildet, ist am geraden Rohrstück 14 im Abstand $L_E$ von der Rohrschelle 22 angeordnet. Die Rohrschelle 23 kann ebenso am geraden Rohrstück 13 im Abstand $L_E$ von der Rohrschelle 21 angeordnet sein.

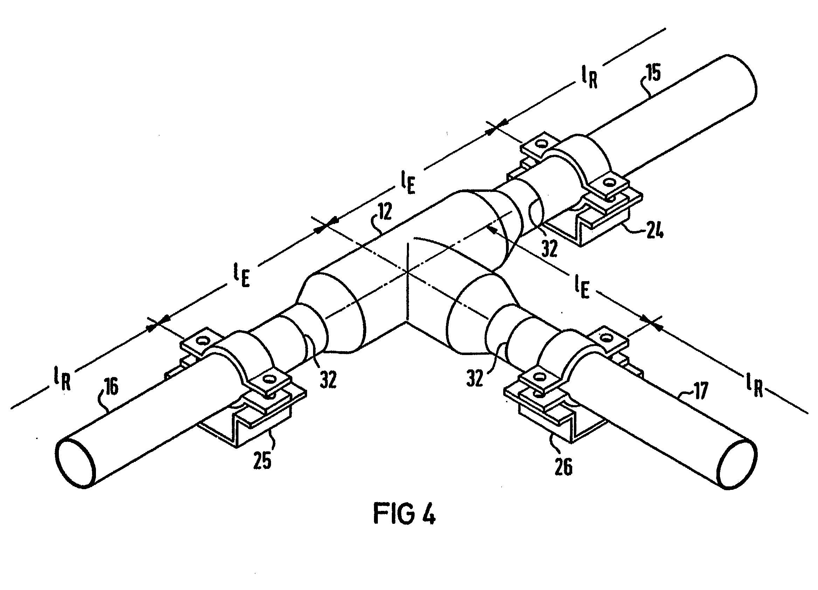

Eine erfindungsgemäße Einrichtung zur mechanischen Entkopplung eines Rohrleitungssystems im Bereich einer Rohrleitungsabzweigung ist in Fig. 4 perspektivisch dargestellt. Dort ist die Abzweigung durch ein T-Stück 12 realisiert, an das gerade Rohrstücke 15,16 und 17 angeschweißt sind. Die drei an den geraden Rohrstücken 15, 16 und 17 angeordneten Rohrschellen 24 bis 26 sind vom Abzweigepunkt 120 im T-Stück 12 im erfindungsgemäßen Abstand $L_E$ angeordnet. Dieser erfindungsgemäße Abstand $L_E$ ist so groß, daß eine Überprüfung der Schweißnähte 32 zwischen dem T-Stück 12 und den geraden Rohrstücken 15, 16 und 17 jederzeit selbst mit Prüfgeräten durchführbar ist.

Die Rohrschellen 21 bis 23, 24 bis 26 sind erfindungsgemäß am Rohrleitungssystem so angeordnet, daß sie die Ecken eines Dreieckes bilden. Daher ist eine erfindungsgemäße Entkopplungseinrichtung im Bereich eines Rohrbogens 11 oder eines T-Stückes 12 angeordnet. Die Anordnung der Rohrschellen 21 bis 23, 24 bis 26 in Form eines Dreieckes und die räumlichen Abstände innerhalb dieser Anordnung wirken derart zusammen, daß eine mechanische Entkopplung des Rohrleitungssystems erzielt wird, die derjenigen eines steifen Festpunktes gleichwertig ist.

## Patentansprüche

1. Einrichtung zur mechanischen Entkopplung eines Rohrleitungssystems, das mindestens ein Verbindungsrohrstück (11, 12) aufweist, mit dem von einem Verbindungspunkt (110, 120) ausgehend verschieden gerichtete gerade Rohrleitungsabschnitte (13 und 14, 15 bis 17) verbunden sind, wobei Rohrleitungen (1) des Rohrleitungssystems in gleichen, von der Belastbarkeit der Rohre abhängenden Abständen ($L_R$) in mit einem Gebäude fest verbundenen Halterungen (2) gelagert sind und, damit Schwingungen des Rohrleitungssystems berechenbar sind, durch mindestens eine Festpunkthalterung unbeweglich gehalten sind, dadurch gekennzeichnet,

daß die Halterungen (2) ausnahmslos handelsübliche Rohrschellen sind,

daß als Festpunkthalterung des Rohrleitungssystems drei Rohrschellen (21 bis 23, 24 bis 26) im Bereich eines Verbindungsrohrstückes (11, 12) angeordnet sind, wobei an jedem der verschieden gerichteten Rohrleitungsabschnitte (13 und 14, 15 bis 17) mindestens eine Rohrschelle (21 bis 23, 24 bis 26) angeordnet ist, so daß die drei Rohrschellen (21 bis 23, 24 bis 26) die Ecken eines Dreieckes bilden, und daß die Abstände ($L_E$) zwischen dem Verbindungspunkt (110, 120) der verschieden gerichteten Rohrleitungsabschnitte (13 und 14, 15 bis 17) und den benachbarten die Festpunkthalterung bildenden Rohrschellen (21 und 22, 24 bis 26) sowie zwischen zwei unmittelbar benachbarten die Festpunkthalterung bildenden Rohrschellen (22 und 23) zwischen 9 und 11 Hundertstel des Abstandes ($L_R$) zwischen benachbarten, ausschließlich zur Lagerung dienenden übrigen Halterungen (2) des Rohrleitungssystems betragen.

2. Einrichtung nach Anspruch 1, dadurch gekennzeichnet, daß das Verbindungsrohrstück ein Rohrbogen (11) ist, mit dem zwei gerade Rohrleitungsabschnitte (13 und 14) verbunden sind, der Verbindungspunkt der Scheitelpunkt (110) des Rohrbogens (11) ist, und

daß als Festpunkthalterung am einen Rohrleitungsabschnitt (14) zwei Rohrschellen (22, 23) und am anderen Rohrleitungsabschnitt (13) eine Rohrschelle (21) angeordnet sind.

3. Einrichtung nach Anspruch 1, dadurch gekennzeichnet, daß das Verbindungsrohrstück ein T-Stück (12) ist, mit dem drei gerade Rohrleitungsabschnitte (15, 16, 17) verbunden sind, der Verbindungspunkt der Abzweigepunkt (120) des T-Stückes (12) ist, und

daß als Festpunkthalterung an jedem Rohrleitungsabschnitt (15, 16, 17) jeweils eine Rohrschelle (24 bis 26) angeordnet ist.

## Claims

1. A device for mechanical decoupling of a piping system, which has at least one connecting pipe piece (11,12), to which are connected varyingly directed straight piping sections (13 and 14, 15 to 17) emanating from a connecting point (110,120), wherein the pipe lines (1) of the piping system are mounted in holders (2) firmly connected to a building at equal distances ($L_R$) depending on the load-carrying capacity of the pipes, and so that vibrations of the piping system can be calculated, are kept immovable by at least one fixed point holder, characterised in that the holders (2) are without exception commercial pipe clamps, that as fixed point holder of the piping system three pipe clamps (21 to 23, 24 to 26) are arranged in the region of a connecting pipe piece (11, 12), wherein on each of the varyingly directed piping sections (13 and 14, 15 to 17) at least one pipe clamp (21 to 23, 24 to 26) is arranged, so that the three pipe clamps (21 to 23, 24 to 26) form the corners of a triangle, and in that the distances ($L_E$) between the connecting point (110, 120) of the varyingly directed piping sections (13 and 14, 15 to 17) and the adjacent pipe clamps (21 and 22, 24 to 26) forming the fixed point holder as well as between two directly adjacent pipe clamps (22 and 23) forming the fixed point holder are between 9 and 11 hundredths of the distance ($L_R$) between adjacent remaining holders (2) of the piping system serving only to support the piping system.

2. A device according to claim 1, characterised in that the connecting pipe piece is a pipe bend (11), connected to which are two straight piping sections (13 and 14), the connecting point is the apex (110) of the pipe bend (11) and in that arranged as fixed point holder on one piping section (14) there are two pipe clamps (22, 23) and on the other piping section (13) one pipe clamp (21).

3. A device according to claim 1, characterised in that the connecting pipe piece is a tee (12), connected to which are three straight piping sections (15,16,17), the connecting point is the branch point (120) of the tee (12) and in that as fixed point holder there is arranged on each pipe line section (15,16,17) a pipe clamp (24 to 26).

## Revendications

1. Dispositif pour réaliser le découplage mécanique d'un système de canalisations, qui comprend au moins un élément tubulaire de jonction (11, 12) auquel sont raccordées des sections de canalisations rectilignes (13 et 14, 15 à 17), orientées différemment à partir du point de jonction (110, 120), et dans lequel des canalisations (1) du système de canalisations étant retenues dans des dispositifs de retenue (2) reliés rigidement à un bâtiment, à des distances ($L_R$), qui dépendent de la capacité de charge des canalisations et sont maintenus immobiles par au moins un dispositif de retenue fixe, de manière que les vibrations du système de canalisations puissent être évaluées, caractérisé par le fait,
que les dispositifs de retenue (2) sont, sans exception, des brides d'attache usuelles dans le commerce,
que trois brides d'attache (21 à 23, 24 à 26) sont disposées, en tant que dispositifs de retenue fixe du système de canalisations, au voisinage d'un élément tubulaire de jonction (11, 12), auquel cas au moins une bride d'attache (21 à 23, 24 à 26), est disposée au niveau de chacune des sections de canalisations (13 et 14, 15 à 17) orientées différemment, de sorte que les trois brides d'attache (21 à 23, 24 à 26) forment les angles d'un triangle, et
que les distances ($L_E$) entre le point de jonction (110, 120) des sections de canalisations (13 et 14, 15 à 17), orientées différemment et les brides d'attache voisines (21 et 22, 24 à 26) constituant les dispositifs de retenue fixe, ainsi qu'entre deux brides d'attache voisines (22 et 23) constituant les dispositifs de retenue fixe sont comprises entre 9 et 11 centièmes de la distance ($L_R$) existant entre le dispositif de retenue voisin (2), utilisé exclusivement à titre de support.

2. Dispositif suivant la revendication 1, caractérisé par le fait que l'élément tubulaire de jonction est un coude tubulaire (11) auquel sont reliées deux sections de canalisations rectilignes (13 et 14), que le point de jonction est le sommet (110) du coude tubulaire (11) et qu'il est prévu, comme dispositifs de support fixe, deux brides d'attache (22, 23) sur une section de canalisation (14) et une bride d'attache (21) sur l'autre section de canalisation (13).

3. Dispositif suivant la revendicaiton 1, caractérisé par le fait que la canalisation de jonction est un élément en T (12), auquel sont reliées trois sections de canalisations rectilignes (15, 16, 17), que le point de jonction est le point d'embranchement (120) de l'élément en T (12) et qu'une bride d'attache respective (24 à 26) est disposée, en tant que dispositif de retenue fixe, sur chaque section de canalisation (15, 16, 17).

$l_R$  $l_E$  $l_E$  110

2  1  23  22  11  21  $l_E$  $l_R$

2

## FIG 1

$l_R$  $l_E$  $l_E$  $l_R$

2  1  25  120  12  24  2  $l_E$

26

$l_R$

2

## FIG 2

FIG 3

EP 0 242 584 B1

FIG 4

EP 0 242 584 B1